# FASCICULE DE BREVET EUROPEEN

(11) **EP 3 341 551 B1**
(45) Date de publication et mention de la délivrance du brevet: **21.08.2019**
(21) Numéro de dépôt: 16757644.6
(22) Date de dépôt: 26.08.2016
(51) Int. Cl.: E06B 9/72, H01M 10/44, H02J 7/00, E06B 9/32, E06B 9/68

(54) **INSTALLATION DOMOTIQUE DE FERMETURE OU DE PROTECTION SOLAIRE ET PROCÉDÉ DE RECHARGE D'UNE BATTERIE POUR UNE TELLE INSTALLATION**
HEIMAUTOMATIONSANLAGE ZUM VERSCHLIESSEN ODER ZUM SONNENSCHUTZ UND VERFAHREN ZUM AUFLADEN EINER BATTERIE FÜR SOLCH EINE ANLAGE
HOME-AUTOMATION EQUIPMENT FOR CLOSURE OR SOLAR PROTECTION AND METHOD FOR RECHARGING A BATTERY FOR SUCH EQUIPMENT

(30) Priorité: 28.08.2015 FR 1558008
(43) Date de publication de la demande: 04.07.2018
(73) Titulaire: SOMFY ACTIVITES SA, 74300 Cluses (FR)
(72) Inventeur: LAGARDE, Eric, 74700 Sallanches (FR); DUPIELET, Norbert, 74700 Sallanches (FR)
(74) Mandataire: Lavoix
(86) Numéro de dépôt international: PCT/EP2016/070170
(87) Numéro de publication internationale: WO 2017/036947

(56) Documents cités:
- WO-A1-2006/091303
- FR-A1- 3 000 625

## Description

La présente invention concerne une installation domotique de fermeture ou de protection solaire.

La présente invention concerne également un procédé de recharge d'une batterie pour une telle installation domotique de fermeture ou de protection solaire.

De manière générale, la présente invention concerne le domaine des dispositifs d'occultation comprenant un dispositif d'entraînement motorisé mettant en mouvement un écran entre au moins une première position et une deuxième position.

Un dispositif d'entraînement motorisé comprend un actionneur électromécanique d'un élément mobile de fermeture, d'occultation ou de protection solaire, tel qu'un store ou tout autre matériel équivalent, appelé par la suite écran.

On connaît déjà le document WO 2006/091303 A1 qui décrit une installation domotique de fermeture ou de protection solaire comprenant un dispositif d'occultation.

Le dispositif d'occultation comprend un caisson, un tube d'enroulement, un écran, une barre de charge, un dispositif d'entraînement motorisé et un dispositif d'alimentation en énergie électrique autonome.

Une première extrémité de l'écran est disposée au niveau du caisson. Et une deuxième extrémité de l'écran est fixée à la barre de charge.

Le dispositif d'entraînement motorisé comprend un actionneur électromécanique permettant de monter et de descendre l'écran, entre une position haute et une position basse, et plus particulièrement d'enrouler et de dérouler l'écran, entre une position enroulée et une position déroulée. L'actionneur électromécanique est relié électriquement au dispositif d'alimentation en énergie électrique autonome.

Le dispositif d'alimentation en énergie électrique autonome comprend une batterie. La batterie est disposée au niveau du caisson du dispositif d'occultation et, plus particulièrement, à l'intérieur d'un tube d'enroulement de l'écran. La batterie comprend plusieurs éléments de stockage d'énergie rechargeables.

Le dispositif d'alimentation en énergie électrique autonome comprend un premier élément de connexion électrique et un deuxième élément de connexion électrique.

Le premier élément de connexion électrique est relié électriquement à la batterie par une liaison électrique. La liaison électrique entre le premier élément de connexion électrique et la batterie est mise en oeuvre au moyen d'un câble d'alimentation électrique s'étendant le long de l'écran et, plus particulièrement, intégré dans la toile de l'écran.

Le premier élément de connexion électrique est disposé au niveau de la barre de charge du dispositif d'occultation et configuré pour être relié à une source d'alimentation électrique externe, de sorte à recharger la batterie.

Le premier élément de connexion électrique est soit un connecteur électrique, soit une bobine coopérant avec une autre bobine disposée au niveau d'un seuil d'une ouverture.

De cette manière, le premier élément de connexion électrique peut être relié électriquement à une prise murale d'un réseau d'alimentation électrique.

Le deuxième élément de connexion électrique est disposé au niveau du caisson du dispositif d'occultation. La liaison électrique entre le premier élément de connexion électrique et la batterie est mise en oeuvre au travers du deuxième élément de connexion électrique reliant électriquement le câble d'alimentation électrique à la batterie.

Le câble d'alimentation électrique comprend une première partie s'étendant entre le premier élément de connexion électrique et le deuxième élément de connexion électrique, ainsi qu'une deuxième partie s'étendant entre le deuxième élément de connexion électrique et la batterie.

Cependant, cette installation domotique présente l'inconvénient de relier électriquement le premier élément de connexion électrique, disposé au niveau de la barre de charge du dispositif d'occultation, à la batterie, disposée au niveau du caisson du dispositif d'occultation, au moyen d'un câble d'alimentation électrique s'étendant le long de la toile enroulable de l'écran.

Le câble d'alimentation électrique reliant électriquement le premier élément de connexion électrique à la batterie est enroulé avec l'écran autour du tube d'enroulement, lorsque l'écran est déplacé en direction de la position enroulée.

Ainsi, l'enroulement et le déroulement du câble d'alimentation électrique sont dépendants des déplacements de l'écran commandés par le dispositif d'entraînement motorisé.

En outre, le deuxième élément de connexion électrique, reliant le câble d'alimentation électrique à la batterie, est soumis à des contraintes exercées lors du déroulement et lors de l'enroulement de l'écran.

Par conséquent, la liaison électrique entre le premier élément de connexion électrique et la batterie peut être endommagée au cours de l'utilisation de l'installation domotique.

Par ailleurs, la connexion électrique entre le câble d'alimentation électrique et la batterie est complexe à mettre en oeuvre, puisque le câble d'alimentation électrique est enroulé autour du tube d'enroulement de l'écran.

L'intégration du câble d'alimentation électrique dans la toile enroulable de l'écran peut également engendrer un endommagement de celle-ci lors du déroulement et de l'enroulement de l'écran autour du tube d'enroulement.

En outre, l'intégration du câble d'alimentation électrique dans la toile enroulable de l'écran nuit à l'esthétique de l'écran.

La présente invention a pour but de résoudre les inconvénients précités et de proposer une installation domotique de fermeture ou de protection solaire permettant de simplifier une liaison électrique entre un élément de connexion électrique et une batterie disposée au niveau d'un dispositif de maintien d'un écran d'un dispositif d'occultation, afin de pouvoir recharger la batterie à partir d'une source d'alimentation électrique externe, tout en garantissant la fiabilité de cette liaison électrique et en minimisant les coûts d'obtention de l'installation domotique.

A cet égard, la présente invention vise, selon un premier aspect, une installation domotique de fermeture ou de protection solaire comprenant un dispositif d'occultation,
le dispositif d'occultation comprenant au moins :
- un écran,
- un dispositif de maintien de l'écran,
- un premier dispositif d'entraînement motorisé, et
- un dispositif d'alimentation en énergie électrique autonome,
le premier dispositif d'entraînement motorisé comprenant au moins :
- un actionneur électromécanique permettant de monter et de descendre l'écran, entre une position haute et une position basse, l'actionneur électromécanique étant relié électriquement au dispositif d'alimentation en énergie électrique autonome,
le dispositif d'alimentation en énergie électrique autonome comprenant au moins :
- une batterie, la batterie étant disposée au niveau du dispositif de maintien de l'écran,
- un câble d'alimentation électrique, et
- un élément de connexion électrique, l'élément de connexion électrique étant relié électriquement à la batterie par le câble d'alimentation électrique, l'élément de connexion électrique étant configuré pour être relié à une source d'alimentation électrique externe, de sorte à recharger la batterie.

Selon l'invention, le dispositif d'occultation comprend un deuxième dispositif d'entraînement motorisé, le deuxième dispositif d'entraînement motorisé comprenant au moins :
- un actionneur électromécanique permettant d'enrouler et de dérouler le câble d'alimentation électrique, reliant électriquement l'élément de connexion électrique à la batterie, sur une bobine d'enroulement, entre une position enroulée et une position déroulée.

Ainsi, le dispositif d'occultation comprend deux dispositifs d'entraînement motorisés indépendants comprenant respectivement un actionneur électromécanique, où le premier dispositif d'entraînement motorisé permet de déplacer l'écran, entre une position haute et une position basse, et où le deuxième dispositif d'entraînement motorisé permet d'enrouler et de dérouler le câble d'alimentation électrique autour de la bobine d'enroulement, entre une position enroulée et une position déroulée, de sorte à pouvoir avoir accès à l'élément de connexion électrique pour la recharge de la batterie disposée au niveau du dispositif de maintien de l'écran.

De cette manière, la liaison électrique entre l'élément de connexion électrique et la batterie disposée au niveau du dispositif de maintien de l'écran est mise en oeuvre au travers d'un câble d'alimentation électrique enroulable par le deuxième dispositif d'entraînement motorisé, indépendamment du dispositif d'entraînement motorisé permettant de déplacer l'écran, entre une position haute et une position basse, de sorte à garantir la fiabilité de cette liaison électrique et à minimiser les coûts d'obtention de l'installation domotique.

En outre, le positionnement de l'élément de connexion électrique à une extrémité du câble d'alimentation électrique permet de faciliter pour l'utilisateur la connexion électrique de la source d'alimentation électrique externe à l'élément de connexion électrique, puisque ce branchement électrique entre l'élément de connexion électrique et la source d'alimentation électrique externe peut être mis en oeuvre lorsque le câble d'alimentation électrique est en position déroulée ou entre la position enroulée et la position déroulée.

Par ailleurs, la batterie peut être rechargée sans avoir à démonter une partie de l'installation domotique et, en particulier, du dispositif de maintien de l'écran.

Dans un premier exemple de réalisation, le deuxième dispositif d'entraînement motorisé est disposé à l'extérieur d'un caisson du dispositif d'occultation, le caisson faisant partie intégrante du dispositif de maintien de l'écran.

Dans un deuxième exemple de réalisation, le deuxième dispositif d'entraînement motorisé est disposé à l'intérieur d'un caisson du dispositif d'occultation, le caisson faisant partie intégrante du dispositif de maintien de l'écran.

En pratique, l'actionneur électromécanique du deuxième dispositif d'entraînement motorisé comprend au moins un moteur électrique dont l'arbre de sortie est cinématiquement relié à la bobine d'enroulement du câble d'alimentation électrique.

Selon une caractéristique préférée de l'invention, le premier dispositif d'entraînement motorisé comprend une unité électronique de contrôle, l'unité électronique de contrôle commandant, d'une part, l'actionneur électromécanique du premier dispositif d'entraînement motorisé et, d'autre part, l'actionneur électromécanique du deuxième dispositif d'entraînement motorisé.

Selon une autre caractéristique préférée de l'invention, le deuxième dispositif d'entraînement motorisé comprend une platine, la platine étant montée sur le dispositif de maintien de l'écran au moyen d'éléments de fixation.

Préférentiellement, la bobine d'enroulement du câble d'alimentation électrique est montée libre en rotation sur la platine, autour d'un axe de rotation défini par un arbre de rotation, l'arbre de rotation de la bobine d'enroulement comprenant également un élément de connexion électrique.

Dans un mode de réalisation, la batterie du dispositif d'alimentation en énergie électrique autonome pouvant être rechargée au travers de l'élément de connexion électrique et du câble d'alimentation électrique est configurée pour alimenter en énergie électrique le deuxième dispositif d'entraînement motorisé.

Dans un autre mode de réalisation, le dispositif d'alimentation en énergie électrique autonome comprend une autre batterie, de sorte à alimenter en énergie électrique le deuxième dispositif d'entraînement motorisé.

La présente invention vise, selon un deuxième aspect, un procédé de recharge d'une batterie pour une installation domotique de fermeture ou de protection solaire telle que mentionnée ci-dessus.

Selon l'invention, ce procédé comprend au moins les étapes suivantes :
- descente de l'élément de connexion électrique relié au câble d'alimentation électrique en direction de la position déroulée au moyen du deuxième dispositif d'entraînement motorisé, et
- branchement d'une source d'alimentation électrique externe sur l'élément de connexion électrique disposé à l'extrémité du câble d'alimentation électrique.

Ce procédé de recharge d'une batterie présente des caractéristiques et avantages analogues à ceux décrits précédemment, en relation avec l'installation domotique selon l'invention.

Dans un premier mode de réalisation, préalablement à l'étape de descente de l'élément de connexion électrique, le procédé de recharge de la batterie comprend au moins les étapes suivantes :
- détermination du niveau de charge de la batterie,
- comparaison de la valeur déterminée du niveau de charge de la batterie à une valeur seuil prédéterminée, et
- commande de l'actionneur électromécanique du deuxième dispositif d'entraînement motorisé, lorsque la valeur déterminée du niveau de charge de la batterie est inférieure à la valeur seuil prédéterminée.

Dans un deuxième mode de réalisation, préalablement à l'étape de descente de l'élément de connexion électrique, le procédé de recharge de la batterie comprend au moins les étapes suivantes :
- activation d'un élément de sélection d'une unité de commande locale, l'unité de commande locale coopérant avec une unité électronique de contrôle commandant le deuxième dispositif d'entraînement motorisé, et
- commande de l'actionneur électromécanique du deuxième dispositif d'entraînement motorisé.

D'autres particularités et avantages de l'invention apparaîtront encore dans la description ci-après, faite en référence aux dessins annexés, donnés à titre d'exemples non limitatifs :
Aux dessins annexés, donnés à titre d'exemples non limitatifs :
- la figure 1 est une vue schématique en coupe transversale d'une installation domotique conforme à un mode de réalisation de l'invention ;
- la figure 2 est une vue schématique en perspective de l'installation domotique illustrée à la figure 1 ;
- la figure 3 est une vue en coupe schématique axiale et partielle de l'installation domotique illustrée aux figures 1 et 2 montrant un actionneur électromécanique de cette installation ;
- la figure 4 est une vue schématique partielle en perspective d'un dispositif d'occultation appartenant à l'installation domotique illustrée aux figures 1 à 3 et comprenant un deuxième dispositif d'entraînement motorisé, où un câble d'alimentation électrique, reliant électriquement un élément de connexion électrique à une batterie, est en position enroulée ;
- la figure 5 est une vue analogue à la figure 4, où le câble d'alimentation électrique est en position déroulée ;
- la figure 6 est une vue analogue à la figure 4 et selon un autre angle, où un capot du deuxième dispositif d'entraînement motorisé a été ôté ;
- la figure 7 est une vue schématique en coupe transversale du deuxième dispositif d'entraînement motorisé illustré aux figures 4 à 6 ; et
- la figure 8 est une vue schématique éclatée du deuxième dispositif d'entraînement motorisé illustré aux figures 4 à 7.

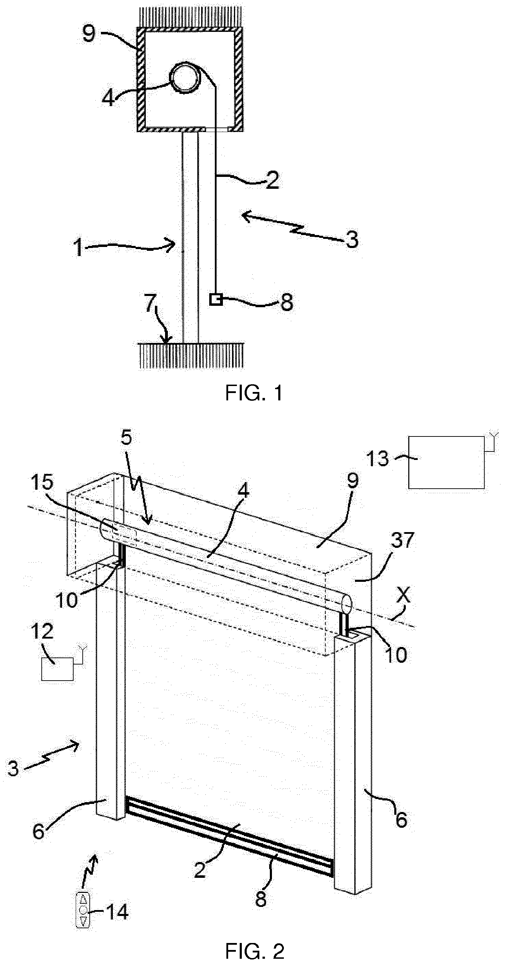

On va décrire tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un store motorisé.

Le dispositif d'occultation 3 peut être un store, notamment en toile, enroulable, plissé ou à lames.

Le dispositif d'occultation 3 comprend un dispositif de maintien 9, 23 de l'écran 2.

On va décrire, en référence aux figures 1 et 2, un store enroulable conforme à un mode de réalisation de l'invention.

L'écran 2 du dispositif d'occultation 3 est enroulé sur un tube d'enroulement 4 entraîné par un premier dispositif d'entraînement motorisé 5 et mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le premier dispositif d'entraînement motorisé 5 comprend l'actionneur électromécanique 11, en particulier de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2, où, dans l'état monté, l'actionneur électromécanique 11 est inséré dans le tube d'enroulement 4.

Le dispositif d'occultation 3 comprend également une barre de charge 8 pour exercer une tension sur l'écran 2.

De manière connue, le store enroulable, qui forme le dispositif d'occultation 3, comporte une toile, formant l'écran 2 du store enroulable 3. Une première extrémité de l'écran 2, en particulier l'extrémité supérieure de l'écran 2 dans la configuration assemblée du dispositif d'occultation 3 dans l'installation domotique, est fixée au tube d'enroulement 4. Et une deuxième extrémité de l'écran 2, en particulier l'extrémité inférieure de l'écran 2 dans la configuration assemblée du dispositif d'occultation 3 dans l'installation domotique, est fixée à la barre de charge 8.

Ici, la toile formant l'écran 2 est réalisée à partir d'un matériau textile.

Dans un exemple de réalisation non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à pouvoir enrouler et dérouler l'écran 2 autour du tube d'enroulement 4.

Dans le cas d'un store enroulable, la position haute enroulée correspond à une position de fin de course haute prédéterminée, ou encore à la mise en appui de la barre de charge 8 de l'écran 2 contre un bord d'un caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Le tube d'enroulement 4 est disposé à l'intérieur du caisson 9 du store enroulable 3. L'écran 2 du store enroulable 3 s'enroule et se déroule autour du tube d'enroulement 4 et est logé au moins en partie à l'intérieur du caisson 9.

De manière générale, le caisson 9 est disposé au-dessus de l'ouverture 1, ou encore en partie supérieure de l'ouverture 1.

Le caisson 9 fait partie intégrante du dispositif de maintien 9, 23 de l'écran 2.

Dans un mode de réalisation illustré à la figure 2, l'écran 2 comporte également au niveau de chacun de ses bords latéraux une pièce d'attache 10 en forme de bande. Les pièces d'attache 10 forment une surépaisseur au niveau de chaque bord latéral de l'écran 2. L'installation domotique comprend deux glissières latérales 6 disposées le long de deux bords latéraux de l'ouverture 1. Et les glissières latérales 6 comprennent respectivement une gorge à l'intérieur de laquelle est retenue une pièce d'attache 10 de l'écran 2, ainsi qu'une extrémité latérale de la barre de charge 8 fixée à la deuxième extrémité de l'écran 2.

Ainsi, lors de l'enroulement ou du déroulement de l'écran 2, les pièces d'attache 10 fixées sur les bords latéraux de l'écran 2 et les extrémités latérales de la barre de charge 8 fixée à la deuxième extrémité de l'écran 2 sont retenues dans les glissières latérales 6, de sorte à garantir un guidage latéral de l'écran 2.

Chaque gorge ménagée dans une glissière latérale 6 permet d'empêcher le retrait d'une pièce d'attache 10 fixée sur l'un des bords latéraux de l'écran 2, lors du déplacement de l'écran 2 entre la position enroulée et la position déroulée.

Préférentiellement, chaque pièce d'attache 10 s'étend suivant toute la longueur de l'un des deux bords latéraux de l'écran 2.

Dans un exemple de réalisation, les pièces d'attache 10 sont fixées respectivement au niveau d'un bord latéral de l'écran 2 par collage, par soudage ou par surmoulage. Et les pièces d'attache 10 peuvent être réalisées en matière plastique et, en particulier, surmoulées sur les bords latéraux de l'écran 2.

Ici, les glissières latérales 6 disposées respectivement le long d'un bord latéral de l'ouverture 1 s'étendent suivant une direction verticale. Les glissières latérales 6 s'étendent depuis le seuil 7 de l'ouverture 1 jusqu'au caisson 9 du store enroulable 3.

Avantageusement, des éléments de garnissage, non représentés, sont disposés à l'intérieur des glissières latérales 6 et coopèrent avec les pièces d'attache 10 fixées respectivement au niveau d'un bord latéral de l'écran 2, de sorte à maintenir l'écran 2 en tension par l'application d'un effort sur chaque pièce d'attache 10 contre une paroi de la glissière latérale 6.

Par exemple et de manière nullement limitative, les éléments de garnissage disposés à l'intérieur des glissières latérales 6 sont des éléments élastiques, notamment en matière plastique. Les éléments de garnissage peuvent également être prévus sous forme de mousse ou comporter un duvet.

Ainsi, les éléments de garnissage disposés à l'intérieur des glissières latérales 6 permettent de garantir l'application d'une résistance de frottement sur les pièces d'attache 10 de l'écran 2, de sorte à maintenir l'écran 2 tendu, lors d'un déplacement de l'écran 2 ou lorsque l'écran 2 est maintenu à l'arrêt.

Avantageusement, le caisson 9 du store enroulable 3 et les glissières latérales 6 forment un cadre à l'intérieur duquel l'écran 2 peut être déplacé. Ce cadre peut être fermé par une barre supplémentaire reliant les deux glissières latérales 6 au niveau du seuil 7 de l'ouverture 1.

Le premier dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité, ou encore une vitesse de vent.

Une télécommande 14, pouvant être un type d'unité de commande locale, et pourvue d'un clavier de commande, qui comprend des moyens de sélection et d'affichage, permet, en outre, à un utilisateur d'intervenir sur l'actionneur électromécanique 11 et/ou l'unité de commande centrale 13.

Le premier dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 14.

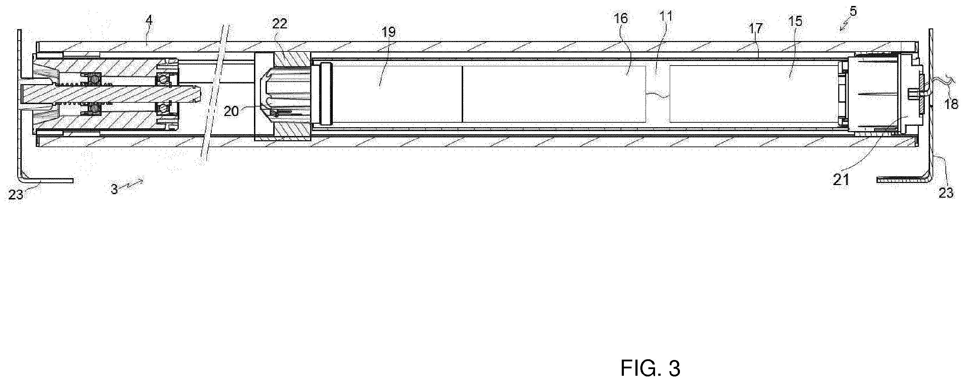

On va décrire à présent, plus en détail et en référence à la figure 3, l'actionneur électromécanique 11 du premier dispositif d'entraînement motorisé 5 appartenant à l'installation domotique des figures 1 et 2.

L'actionneur électromécanique 11 comprend un moteur électrique 16. Le moteur électrique 16 comprend un rotor et un stator, non représentés et positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres de commande, les ordres de commande étant émis par un émetteur d'ordres, tel que la télécommande 14 destinée à commander l'actionneur électromécanique 11 ou l'une des unités de commande locale 12 ou centrale 13.

Préférentiellement, le module de réception d'ordres de commande de l'unité électronique de contrôle 15 est de type sans fil. En particulier, le module de réception d'ordres de commande est configuré pour recevoir des ordres de commande radioélectriques.

Le module de réception d'ordres de commande peut également permettre la réception d'ordres de commande transmis par des moyens filaires.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

L'actionneur électromécanique 11 du premier dispositif d'entraînement motorisé 5 est alimenté en énergie électrique au moyen d'une batterie 24. L'actionneur électromécanique 11 permet de déplacer l'écran 2 du dispositif d'occultation 3.

Ici, l'actionneur électromécanique 11 comprend un câble d'alimentation électrique 18 permettant son alimentation en énergie électrique depuis la batterie 24.

Le carter 17 de l'actionneur électromécanique 11 est, préférentiellement, de forme cylindrique.

Dans un mode de réalisation, le carter 17 est réalisé dans un matériau métallique.

La matière du carter de l'actionneur électromécanique n'est nullement limitative et peut être différente et, en particulier, en matière plastique.

L'actionneur électromécanique 11 comprend également un dispositif de réduction à engrenages 19 et un arbre de sortie 20.

L'actionneur électromécanique 11 peut également comprendre un dispositif de détection de fin de course et/ou d'obstacle, pouvant être mécanique ou électronique.

Avantageusement, le moteur électrique 16 et le dispositif de réduction à engrenages 19 sont disposés à l'intérieur du carter 17 de l'actionneur électromécanique 11.

L'arbre de sortie 20 de l'actionneur électromécanique 11 est disposé à l'intérieur du tube d'enroulement 4, et au moins en partie à l'extérieur du carter 17 de l'actionneur électromécanique 11.

L'arbre de sortie 20 de l'actionneur électromécanique 11 est accouplé, par un moyen de liaison 22, au tube d'enroulement 4, en particulier un moyen de liaison en forme de roue.

L'actionneur électromécanique 11 comprend également un élément d'obturation 21 d'une extrémité du carter 17.

Ici, le carter 17 de l'actionneur électromécanique 11 est fixé à un support 23, en particulier une joue, du caisson 9 du dispositif d'occultation 3 au moyen de l'élément d'obturation 21 formant un support de couple, en particulier une tête d'obturation et de reprise de couple. Dans un tel cas où l'élément d'obturation 21 forme un support de couple, l'élément d'obturation 21 est également appelé un point fixe de l'actionneur électromécanique 11.

Le support 23 fait également partie intégrante du dispositif de maintien 9, 23 de l'écran 2.

Ici, et tel qu'illustré à la figure 3, l'unité électronique de contrôle 15 est disposée à l'intérieur du carter 17 de l'actionneur électromécanique 11.

Ainsi, l'unité électronique de contrôle 15 est intégrée à l'intérieur du carter 17 de l'actionneur électromécanique 11.

Dans un autre mode de réalisation, l'unité électronique de contrôle 15 est disposée à l'extérieur du carter 17 de l'actionneur électromécanique 11 et, en particulier, montée sur le support 23, dans l'élément d'obturation 21 ou dans le caisson 9.

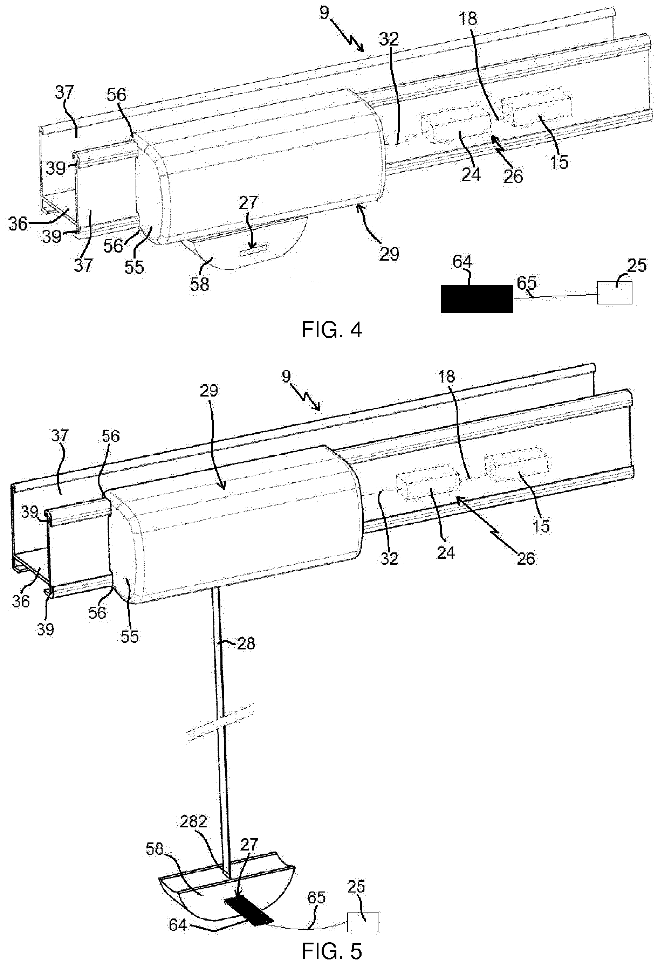

On va décrire à présent, en référence aux figures 4 à 8, certaines parties du dispositif d'occultation 3.

Le caisson 9 du dispositif d'occultation 3 comprend une paroi inférieure 36, une paroi supérieure, non représentée aux figures 4 à 6 mais visible à la figure 2, et deux parois latérales 37, dans la configuration assemblée du dispositif d'occultation 3. La paroi inférieure 36 est omise à la figure 2, pour la clarté du dessin.

Le dispositif d'occultation 3 comprend un dispositif d'alimentation en énergie électrique autonome 26, en ce sens qu'il permet d'alimenter l'actionneur électromécanique 11, sans être lui-même relié au réseau secteur. L'actionneur électromécanique 11 est relié électriquement au dispositif d'alimentation en énergie électrique autonome 26.

Le dispositif d'alimentation en énergie électrique autonome 26 comprend la batterie 24. La batterie 24 est disposée au niveau du dispositif de maintien 9, 23 de l'écran 2 et, plus particulièrement, du caisson 9 du dispositif d'occultation 3.

Ici, la batterie 24 est disposée à l'intérieur du caisson 9.

En variante, la batterie 24 est disposée à l'extérieur du caisson 9.

Ici et tel qu'illustré aux figures 4 et 5, la batterie 24 est reliée électriquement directement à l'unité électronique de contrôle 15, par le câble d'alimentation électrique 18.

Avantageusement, le premier dispositif d'entraînement motorisé 5 et, en particulier, l'unité électronique de contrôle 15, comprend des éléments de chargement configurés pour charger la batterie 24 à partir de l'énergie électrique fournie par une source d'alimentation électrique externe 25.

Ici, la batterie 24 est de type rechargeable et alimente en énergie électrique l'actionneur électromécanique 11 du premier dispositif d'entraînement motorisé 5.

La batterie 24 comprend un ou plusieurs éléments de stockage d'énergie. Les éléments de stockage d'énergie de la batterie 24 peuvent être, notamment, des piles rechargeables.

Le dispositif d'alimentation en énergie électrique autonome 26 comprend un câble d'alimentation électrique 28.

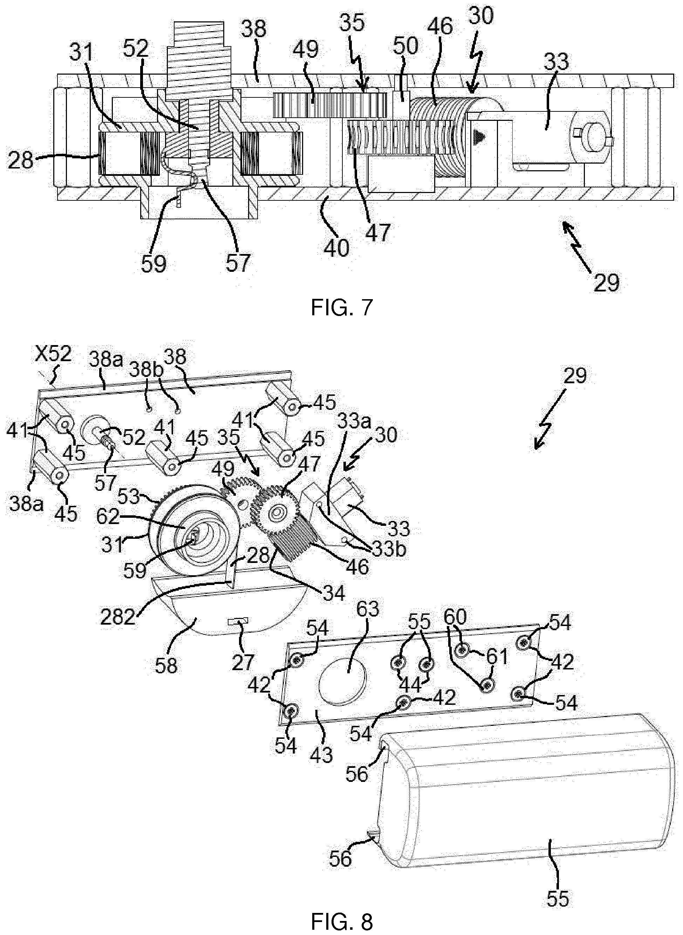

Ici, le câble d'alimentation électrique 28 est un câble électrique plat, comme visible aux figures 5 et 8.

Le dispositif d'alimentation en énergie électrique autonome 26 comprend un premier élément de connexion électrique 27.

Le premier élément de connexion électrique 27 est relié électriquement à la batterie 24, notamment, par le câble d'alimentation électrique 28.

Le premier élément de connexion électrique 27 est configuré pour être relié à la source d'alimentation électrique externe 25, de sorte à recharger la batterie 24.

A titre d'exemple nullement limitatif, la source d'alimentation électrique externe 25 est un chargeur pouvant être branché sur une prise électrique murale, de sorte à recharger la batterie 24 depuis un réseau d'alimentation électrique.

Le premier élément de connexion électrique 27 est disposé au niveau d'une extrémité libre 282 du câble d'alimentation électrique 28.

En pratique, le premier élément de connexion électrique 27 comprend un connecteur électrique.

Ici, le connecteur électrique du premier élément de connexion électrique 27 est configuré pour coopérer, lorsque le câble d'alimentation électrique 28 est déroulé, comme visible à la figure 5, avec un connecteur électrique 64 relié par un câble d'alimentation électrique 65 à la source d'alimentation électrique externe 25.

Le dispositif d'occultation 3 comprend un deuxième dispositif d'entraînement motorisé 29.

On va décrire plus en détail, en référence aux figures 4 à 8, le deuxième dispositif d'entraînement motorisé 29.

Le deuxième dispositif d'entraînement motorisé 29 comprend au moins un actionneur électromécanique 30 permettant d'enrouler et de dérouler le câble d'alimentation électrique 28 sur une bobine d'enroulement 31, entre une position enroulée et une position déroulée.

Le deuxième dispositif d'entraînement motorisé 29 permet d'établir une liaison électrique entre le premier élément de connexion électrique 27 disposé à une extrémité du câble d'alimentation électrique 28 et la batterie 24 disposée au niveau du dispositif de maintien 9, 23 de l'écran 2, en particulier au niveau du caisson 9.

Le câble d'alimentation électrique 28 relie électriquement le premier élément de connexion électrique 27 à la batterie 24.

L'actionneur électromécanique 30 du deuxième dispositif d'entraînement motorisé 29 est relié électriquement au dispositif d'alimentation en énergie électrique autonome 26.

Ainsi, le dispositif d'occultation 3 comprend deux dispositifs d'entraînement motorisés 5, 29 indépendants comprenant respectivement un actionneur électromécanique 11, 30, où le premier dispositif d'entraînement motorisé 5 permet de déplacer l'écran 2, entre une position haute et une position basse, et où le deuxième dispositif d'entraînement motorisé 29 permet d'enrouler et de dérouler le câble d'alimentation électrique 28 autour de la bobine d'enroulement 31, entre une position enroulée et une position déroulée, de sorte à pouvoir avoir accès au premier élément de connexion électrique 27 pour la recharge de la batterie 24 disposée au niveau du dispositif de maintien 9, 23 de l'écran 2, en particulier au niveau du caisson 9.

De cette manière, la liaison électrique entre le premier élément de connexion électrique 27 et la batterie 24 disposée au niveau du dispositif de maintien 9, 23 de l'écran 2 est mise en oeuvre au travers du câble d'alimentation électrique 28 enroulable par le deuxième dispositif d'entraînement motorisé 29, indépendamment du premier dispositif d'entraînement motorisé 5 permettant de déplacer l'écran 2, entre une position haute et une position basse, de sorte à garantir la fiabilité de cette liaison électrique et à minimiser les coûts d'obtention de l'installation domotique.

En outre, le positionnement du premier élément de connexion électrique 27 à une extrémité du câble d'alimentation électrique 28 permet de faciliter pour l'utilisateur la connexion électrique de la source d'alimentation électrique externe 25 au premier élément de connexion électrique 27, puisque ce branchement électrique entre le premier élément de connexion électrique 27 et la source d'alimentation électrique externe 25 peut être mis en oeuvre lorsque le câble d'alimentation électrique 28 est en position déroulée par rapport à la bobine d'enroulement 31, ou entre la position enroulée sur la bobine d'enroulement 31 et la position déroulée.

Par ailleurs, la batterie 24 peut être rechargée sans avoir à démonter une partie de l'installation domotique et, en particulier, du dispositif de maintien 9, 23 de l'écran 2, notamment du caisson 9.

L'actionneur électromécanique 30 du deuxième dispositif d'entraînement motorisé 29 est distinct de l'actionneur électromécanique 11 du premier dispositif d'entraînement motorisé 5. L'actionneur électromécanique 11 du premier dispositif d'entraînement motorisé 5 peut être nommé le premier actionneur électromécanique et l'actionneur électromécanique 30 du deuxième dispositif d'entraînement motorisé 29 peut être nommé le deuxième actionneur électromécanique.

Le deuxième actionneur électromécanique 30 est alimenté en énergie électrique au moyen de la batterie 24. Ce deuxième actionneur électromécanique 30 permet de déplacer le premier élément de connexion électrique 27, lors de l'enroulement ou lors du déroulement du câble d'alimentation électrique 28 autour de la bobine d'enroulement 31.

Ici, le deuxième actionneur électromécanique 30 comprend également un câble d'alimentation électrique 32, permettant son alimentation en énergie électrique depuis la batterie 24.

En pratique, l'actionneur électromécanique 30 du deuxième dispositif d'entraînement motorisé 29 comprend au moins un moteur électrique 33, dont l'arbre de sortie 34 est relié à la bobine d'enroulement 31 du câble d'alimentation électrique 28.

Avantageusement, l'actionneur électromécanique 30 comprend également un dispositif de réduction à engrenages 35.

Dans un mode de réalisation, l'actionneur électromécanique 30 peut également comprendre un dispositif de détection de fin de course et/ou d'obstacle, pouvant être mécanique ou électronique.

Comme mentionné ci-dessus, le premier élément de connexion électrique 27 est disposé au niveau de l'extrémité libre 282 du câble d'alimentation électrique 28. Cette extrémité libre 282 du câble d'alimentation électrique 28 est opposée à l'extrémité du câble d'alimentation électrique 28 fixée sur la bobine d'enroulement 31.

En pratique, le câble d'alimentation électrique 28 comprend un lest 58, de sorte à maintenir en tension ce câble d'alimentation électrique 28. Le lest 58 est fixé à l'extrémité libre 282 du câble d'alimentation électrique 28.

Ainsi, lors de l'enroulement et du déroulement du câble d'alimentation électrique 28 au moyen du deuxième dispositif d'entraînement motorisé 29, le câble d'alimentation électrique 28 est maintenu en tension par le lest 58, de sorte à garantir l'enroulement et le déroulement de ce câble d'alimentation électrique 28 autour de la bobine d'enroulement 31.

Avantageusement, le poids du lest 58 disposé à l'extrémité libre 282 du câble d'alimentation électrique 28 est dépendant de la raideur du câble d'alimentation électrique 28, lors de l'enroulement de ce dernier autour de la bobine d'enroulement 31.

Ici, le premier élément de connexion électrique 27 est ménagé dans le lest 58 fixé à l'extrémité libre du câble d'alimentation électrique 28.

Le deuxième dispositif d'entraînement motorisé 29 comprend une platine 38. La platine 38 est montée sur le dispositif de maintien 9, 23 de l'écran 2, en particulier sur le caisson 9, au moyen d'éléments de fixation 38a, 39.

Les éléments de fixation du deuxième dispositif d'entraînement motorisé 29 sur le caisson 9 peuvent être, notamment, des éléments de fixation par encliquetage élastique, par emboîtement ou encore par vissage.

Dans un premier cas, tel qu'illustré aux figures 4 à 8, le deuxième dispositif d'entraînement motorisé 29 est disposé à l'extérieur du dispositif de maintien 9, 23 de l'écran 2, et en particulier du caisson 9.

Dans un tel cas, le caisson 9 du dispositif d'occultation 3 comprend des rainures 39 coopérant avec des bords 38a, en particulier longitudinaux, de la platine 38 du deuxième dispositif d'entraînement motorisé 29, de sorte à faire coulisser la platine 38 le long d'une paroi 37 du caisson 9.

Ici et tel qu'illustré aux figures 4 à 6, les rainures 39 du caisson 9 sont ménagées sur une face externe d'une paroi latérale 37 du caisson 9.

Ainsi, la platine 38 peut coulisser le long de la paroi latérale 37 du caisson 9 au moyen des rainures 39, lors de l'assemblage du deuxième dispositif d'entraînement motorisé 29 sur le caisson 9 et, en particulier, du montage de la platine 38 sur le caisson 9.

Les rainures 39 du caisson 9 et les bords 38a de la platine 38 forment les éléments de fixation de la platine 38 sur le caisson 9.

Préférentiellement, le deuxième dispositif d'entraînement motorisé 29 est maintenu en position sur le dispositif de maintien 9, 23 de l'écran 2, en particulier du caisson 9, par des éléments de blocage, non représentés.

Ainsi, les éléments de blocage du deuxième dispositif d'entraînement motorisé 29, en particulier de la platine 38, sur le dispositif de maintien 9, 23 de l'écran 2, en particulier le caisson 9, permettent de garantir le positionnement du deuxième dispositif d'entraînement motorisé 29 par rapport au dispositif de maintien 9, 23 de l'écran 2.

Dans l'exemple de réalisation illustré aux figures 4 à 8, les éléments de blocage du deuxième dispositif d'entraînement motorisé 29, en particulier de la platine 38, sur le caisson 9 comprennent au moins une vis de pression prenant appui sur la paroi latérale 37 du caisson 9, en particulier la paroi latérale 37 du caisson 9 disposée en vis-à-vis de la platine 38. La vis de pression coopère avec un trou de fixation ménagé dans la platine 38, puis avec la paroi latérale 37 du caisson 9, de sorte à immobiliser le deuxième dispositif d'entraînement motorisé 29 par rapport au caisson 9 et, en particulier, à garantir le positionnement longitudinal du deuxième dispositif d'entraînement motorisé 29 par rapport au caisson 9.

Les éléments de blocage, en particulier de la platine 38, sur le dispositif de maintien 9, 23 de l'écran 2, en particulier le caisson 9, peuvent être différents et, notamment, être des éléments de vissage, d'encliquetage élastique ou encore de collage.

Dans un deuxième cas, non représenté, le deuxième dispositif d'entraînement motorisé 29 est disposé à l'intérieur du dispositif de maintien 9, 23 de l'écran 2, et en particulier du caisson 9.

La bobine d'enroulement 31 du câble d'alimentation électrique 28 est mobile en rotation autour d'un axe X52 par rapport à la platine 38, cet axe X52 étant défini au moyen d'un arbre de rotation 52.

L'arbre de rotation 52 de la bobine d'enroulement 31 comprend également un élément de connexion électrique, en particulier un deuxième élément de connexion électrique 57 du dispositif d'alimentation en énergie électrique autonome 26.

Ici, le deuxième élément de connexion électrique 57 est formé par l'arbre de rotation 52 de la bobine d'enroulement 31.

En pratique, le deuxième élément de connexion électrique 57 est relié électriquement, d'une part, au câble d'alimentation électrique 28 et, d'autre part à la batterie 24 au moyen de fils d'alimentation électrique, non représentés.

Le deuxième élément de connexion électrique 57 est ainsi disposé au niveau du dispositif de maintien 9, 23 de l'écran 2 et, plus particulièrement, du caisson 9 du dispositif d'occultation 3.

Ici, le câble d'alimentation électrique 28 comprend une pluralité de fiches électriques, en particulier au nombre de deux, coopérant respectivement avec une encoche ménagée dans la bobine d'enroulement 31.

En outre, la connexion électrique entre le câble d'alimentation électrique 28 et le deuxième élément de connexion électrique 57 est mise en oeuvre par un élément de rappel élastique 59, tel qu'illustré aux figures 7 et 8.

Avantageusement, le caisson 9 comprend une ouverture, non représentée, de sorte à permettre le passage de l'arbre de rotation 52 au travers de celle-ci et, plus particulièrement le passage des fils d'alimentation électrique reliant le deuxième élément de connexion électrique 57 à la batterie 24.

Ici, l'ouverture est ménagée dans la paroi latérale 37 du caisson 9, le long de laquelle est disposé le deuxième dispositif d'entraînement motorisé 29.

Par ailleurs, la platine 38 du deuxième dispositif d'entraînement motorisé 29 comprend également une ouverture, non représentée, de sorte à permettre le passage de l'arbre de rotation 52 au travers de celle-ci et, plus particulièrement le passage des fils d'alimentation électrique reliant le deuxième élément de connexion électrique 57 à la batterie 24.

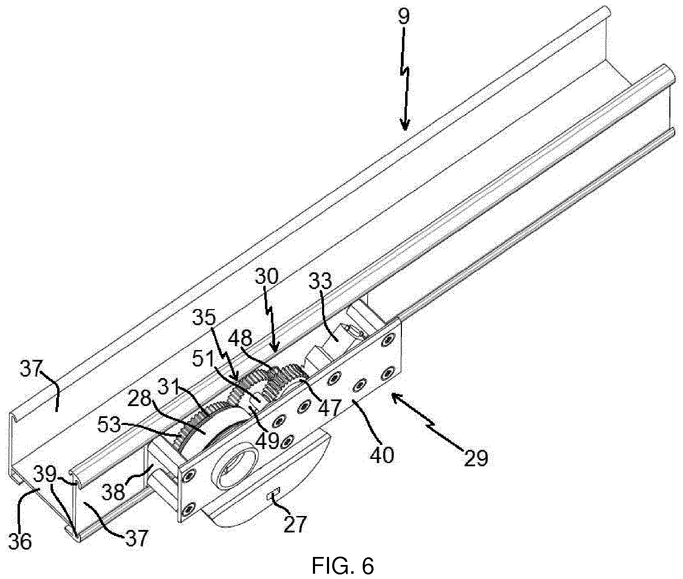

En pratique, le dispositif de réduction à engrenages 35 et le moteur électrique 33 du deuxième dispositif d'entraînement motorisé 29 sont montés sur un support 40, tel qu'illustré aux figures 6 à 8.

Avantageusement, la bobine d'enroulement 31 est montée en rotation libre par rapport au support 40 au moyen d'un palier 62.

Ici, le palier 62 traverse une ouverture 63 ménagée dans la paroi 43 du support 40.

En outre, le palier 62 fait partie intégrante de la bobine d'enroulement 31, de sorte à former une seule pièce.

L'actionneur électromécanique 30 est monté sur la platine 38 au moyen d'éléments de fixation 54.

Avantageusement, le support 40 est fixé sur la platine 38 au moyen d'éléments de fixation 41, 54, en particulier par vissage.

Ici, la platine 38 comprend des goujons 41. Les goujons 41 de la platine 38 coopèrent avec des vis de fixation 54, de sorte à assembler le support 40 sur la platine 38. Les vis de fixation 54 traversent des trous de passage 42 ménagés dans une paroi 43 du support 40.

Les goujons 41 et les vis de fixation 54 forment au moins en partie les éléments de fixation du support 40 sur la platine 38.

Le support 40 est positionné sur la platine 38 au moyen de butées 45.

Ici, les butées 45 sont formées par les goujons 41 de la platine 38, en particulier par une face des goujons 41 mise en appui contre la paroi 43 du support 40.

Avantageusement, la distance entre le support 40 et la platine 38 est fonction de la longueur des goujons 41.

A titre d'exemple nullement limitatif, la platine 38 comprend cinq goujons 41 coopérant respectivement avec une vis de fixation 54. Et chaque vis de fixation 54 coopère avec un trou de passage 42 du support 40.

Comme illustré aux figures 6 et 8, le moteur électrique 33 du deuxième dispositif d'entraînement motorisé 29 est fixé sur le support 40 au moyen d'éléments de fixation 60, en particulier par vissage.

Ici, le moteur électrique 33 du deuxième dispositif d'entraînement motorisé 29 comprend un corps 33a dans lequel sont ménagés des trous de fixation 33b. Les trous de fixation 33b ménagés dans le corps 33a du moteur électrique 33 coopèrent avec des vis de fixation 60, de sorte à assembler le moteur électrique 33 du deuxième dispositif d'entraînement motorisé 29 sur le support 40. Les vis de fixation 60 traversent des trous de passage 61 ménagés dans la paroi 43 du support 40.

Les trous de fixation 33b ménagés dans le corps 33a du moteur électrique 33 et les vis de fixation 60 forment au moins en partie les éléments de fixation du moteur électrique 33 du deuxième dispositif d'entraînement motorisé 29 sur le support 40.

L'arbre de sortie 34 de l'actionneur électromécanique 30 du deuxième dispositif d'entraînement motorisé 29 est accouplé à la bobine d'enroulement 31, en particulier au moyen du dispositif de réduction à engrenages 35.

En pratique, le moteur électrique 33 du deuxième dispositif d'entraînement motorisé 29 est relié électriquement à la batterie 24 au moyen du câble d'alimentation électrique 32. Le caisson 9 et la platine 38 comprennent respectivement une ouverture de passage du câble d'alimentation électrique 32.

Dans l'exemple de réalisation illustré aux figures 6 à 8, l'arbre de sortie 34 du moteur électrique 33 comporte un engrenage 46.

Le dispositif de réduction à engrenages 35 comprend, en outre, une pluralité d'engrenages 47, 48, 49. Les engrenages 47, 48, 49 du dispositif de réduction à engrenages 35 sont montés sur le support 40 au moyen d'arbres de rotation 50, 51.

Ici, les arbres de rotation 50, 51 supportant les engrenages 47, 48, 49 du dispositif de réduction à engrenages 35 s'étendent entre le support 40 et la platine 38. Les arbres de rotation 50, 51 sont maintenus respectivement au moyen d'une ouverture 38b ménagée dans la platine 38 et d'une vis de fixation 55 passant au travers d'une ouverture de passage 44 ménagée dans le support 40.

L'engrenage 48 du dispositif de réduction à engrenages 35 a été ôté sur la figure 7, de sorte à faciliter la lecture de cette figure et, en particulier, permettre de visualiser l'arbre de rotation 50. A la figure 8, cet engrenage 48 est masqué par l'engrenage 47. En revanche, cet engrenage 48 est visible à la figure 6.

L'engrenage 46 monté sur l'arbre de sortie 34 du moteur électrique 33 coopère avec l'engrenage 47 du dispositif de réduction à engrenages 35. L'engrenage 47 est le premier engrenage du dispositif de réduction à engrenages 35.

Ici, l'engrenage 46 et l'engrenage 47 forment une liaison à roue et vis sans fin.

La bobine d'enroulement 31 du câble d'alimentation électrique 28 comporte un engrenage 53. L'engrenage 53 est monté sur l'arbre de rotation 52.

Ici, l'engrenage 53 et la bobine d'enroulement 31 forment une unique pièce montée sur l'arbre de rotation 52.

En variante, l'engrenage 53 et la bobine d'enroulement 31 sont deux pièces distinctes montées sur l'arbre de rotation 52.

L'engrenage 53 coopère avec l'engrenage 49 du dispositif de réduction à engrenages 35. L'engrenage 49 est le dernier engrenage du dispositif de réduction à engrenages 35.

Avantageusement, le deuxième dispositif d'entraînement motorisé 29 comprend un capot 55. Le capot 55 est monté sur le dispositif de maintien 9, 23 de l'écran 2, en particulier sur le caisson 9 du dispositif d'occultation 3, au moyen d'éléments de fixation 56.

Préférentiellement, les éléments de fixation 56 du deuxième dispositif d'entraînement motorisé 29 sur le caisson 9 du dispositif d'occultation 3 sont des éléments de fixation par encliquetage élastique.

En pratique, les éléments de fixation 56 par encliquetage élastique du deuxième dispositif d'entraînement motorisé 29 coopèrent avec une paroi latérale 37 du caisson 9 et, plus particulièrement, prennent appui contre une bordure supérieure de la paroi latérale 37 du caisson 9 et une bordure inférieure de la paroi latérale 37 du caisson 9.

Ici, la fixation par encliquetage élastique du deuxième dispositif d'entraînement motorisé 29 sur la paroi latérale 37 du caisson 9 est mise en oeuvre par une déformation élastique du capot 55 du deuxième dispositif d'entraînement motorisé 29 et par la mise en place de pattes 56 du capot 55, d'une part, contre la bordure supérieure de la paroi latérale 37 du caisson 9 et, d'autre part, contre la bordure inférieure de la paroi latérale 37 du caisson 9.

En pratique, la fixation par encliquetage élastique du deuxième dispositif d'entraînement motorisé 29 sur la paroi latérale 37 du caisson 9 est mise en oeuvre par une déformation élastique des pattes 56 du capot 55.

L'actionneur électromécanique 11 du premier dispositif d'entraînement motorisé 5 comprend l'unité électronique de contrôle 15.

Préférentiellement, l'unité électronique de contrôle 15 commande, d'une part, l'actionneur électromécanique 11 du premier dispositif d'entraînement motorisé 5, en particulier le moteur électrique 16, et, d'autre part, l'actionneur électromécanique 30 du deuxième dispositif d'entraînement motorisé 29, en particulier le moteur électrique 33.

Ainsi, les premier et deuxième dispositifs d'entraînement motorisé 5, 29 sont commandés au moyen d'une même unité électronique de contrôle 15, de sorte à simplifier le dispositif d'occultation 3 et à minimiser les coûts d'obtention de celui-ci.

On va décrire à présent un procédé de recharge de la batterie 24 conforme à un mode de réalisation de l'invention.

Le procédé de recharge de la batterie 24 comprend au moins les étapes suivantes, de préférence exécutées dans l'ordre mentionné :
- descente de l'élément de connexion électrique 27 relié au câble d'alimentation électrique 28 en direction de la position déroulée au moyen du deuxième dispositif d'entraînement motorisé 29, et
- branchement d'une source d'alimentation électrique externe 25 sur l'élément de connexion électrique 27 disposé à l'extrémité du câble d'alimentation électrique 28.

Avantageusement, le déroulement du câble d'alimentation électrique 28 est mis en oeuvre au moyen du deuxième dispositif d'entraînement motorisé 29 jusqu'à une position prédéterminée de recharge de la batterie 24.

Préférentiellement, la position prédéterminée de recharge de la batterie 24 est définie de sorte à être inaccessible pour les enfants, par exemple à une hauteur de l'ordre de un mètre et cinquante centimètres par rapport au sol d'une pièce où se situe l'installation domotique, de sorte à garantir la sécurité et à éviter qu'un enfant ne puisse accéder au premier élément de connexion électrique 27 situé à l'extrémité libre du câble d'alimentation électrique 28.

Dans un premier mode de réalisation, préalablement à l'étape de descente de l'élément de connexion électrique 27, le procédé de recharge de la batterie 24 comprend au moins les étapes suivantes :
- détermination du niveau de charge de la batterie 24,
- comparaison de la valeur déterminée du niveau de charge de la batterie 24 à une valeur seuil prédéterminée, et
- commande de l'actionneur électromécanique 30 du deuxième dispositif d'entraînement motorisé 29, lorsque la valeur déterminée du niveau de charge de la batterie 24 est inférieure à la valeur seuil prédéterminée.

Ainsi, le deuxième dispositif d'entraînement motorisé 29 déroule le câble d'alimentation électrique 28 lorsque le niveau de charge de la batterie 24 est inférieur à la valeur seuil prédéterminée, de sorte que l'élément de connexion électrique 27 soit à une hauteur accessible par l'utilisateur pour recharger la batterie 24 à partir de la source d'alimentation électrique externe 25.

De cette manière, le déroulement du câble d'alimentation électrique 28 est mis en oeuvre automatiquement par le deuxième dispositif d'entraînement motorisé 29, en particulier par l'unité électronique de contrôle 15 commandant le deuxième dispositif d'entraînement motorisé 29, de sorte à avertir l'utilisateur que la batterie 24 nécessite d'être rechargée à partir de la source d'alimentation électrique externe 25.

En outre, le déroulement du câble d'alimentation électrique 28 au moyen du deuxième dispositif d'entraînement motorisé 29 jusqu'à la position prédéterminée de recharge de la batterie 24 permet d'avertir visuellement l'utilisateur de la nécessité de recharger la batterie 24 à partir de la source d'alimentation électrique externe 25 et, en particulier, sans avoir recours à un dispositif d'éclairage spécifique ou encore à un mouvement particulier du deuxième dispositif d'entraînement motorisé 29.

Dans un deuxième mode de réalisation, préalablement à l'étape de descente de l'élément de connexion électrique 27, le procédé de recharge de la batterie 24 comprend au moins les étapes suivantes :
- activation d'un élément de sélection d'une unité de commande locale 12, 14, l'unité de commande locale 12, 14 coopérant avec l'unité électronique de contrôle 15 commandant le deuxième dispositif d'entraînement motorisé 29, et
- commande de l'actionneur électromécanique 30 du deuxième dispositif d'entraînement motorisé 29.

Ainsi, le deuxième dispositif d'entraînement motorisé 29 déroule le câble d'alimentation électrique 28 lorsqu'un élément de sélection de l'unité de commande locale 12, 14 a été activé, de sorte que l'élément de connexion électrique 27 soit à une hauteur accessible par l'utilisateur pour recharger la batterie 24 à partir de la source d'alimentation électrique externe 25.

A titre d'exemple nullement limitatif, l'activation d'un élément de sélection de l'unité de commande locale 12, 14 peut correspondre à un appui long, c'est-à-dire pendant une période de temps supérieure à une valeur seuil prédéterminée, pouvant être par exemple de l'ordre de plusieurs secondes.

L'activation d'un élément de sélection de l'unité de commande locale 12, 14 permettant la commande du deuxième dispositif d'entraînement motorisé 29 peut être mise en oeuvre différemment et, en particulier, au travers d'un menu spécifique de l'unité de commande locale 12, 14, d'un bouton spécifique de l'unité de commande locale 12, 14, ou encore par une séquence spécifique d'activation d'un ou plusieurs boutons de l'unité de commande locale 12, 14.

Grâce à la présente invention, le dispositif d'occultation comprend deux dispositifs d'entraînement motorisés indépendants comprenant respectivement un actionneur électromécanique, où le premier dispositif d'entraînement motorisé permet de déplacer l'écran, entre une position haute et une position basse, et où le deuxième dispositif d'entraînement motorisé permet d'enrouler et de dérouler le câble d'alimentation électrique autour de la bobine d'enroulement, entre une position enroulée et une position déroulée, de sorte à pouvoir avoir accès à l'élément de connexion électrique pour la recharge de la batterie disposée au niveau du dispositif de maintien de l'écran.

Bien entendu, de nombreuses modifications peuvent être apportées aux exemples de réalisation décrits précédemment sans sortir du cadre de l'invention défini par les revendications.

En particulier, le deuxième dispositif d'entraînement motorisé 29 peut être fixé au niveau de l'extrémité du câble d'alimentation électrique 28 comportant l'élément de connexion électrique 27, au lieu d'être fixé au niveau du caisson 9 du dispositif d'occultation 3.

Ainsi, le deuxième dispositif d'entraînement motorisé 29 peut être mobile par rapport au dispositif de maintien 9, 23 de l'écran 2 et mis en déplacement en fonction de l'enroulement et du déroulement du câble d'alimentation électrique 28 reliant l'élément de connexion électrique 27 à la batterie 24.

Dans un mode de réalisation, le dispositif d'alimentation en énergie électrique autonome 26 comprend une autre batterie, non représentée, de sorte à alimenter en énergie électrique le deuxième dispositif d'entraînement motorisé 29, en particulier lorsque le niveau de charge de la batterie 24 principale permettant l'alimentation en énergie électrique du premier dispositif d'entraînement motorisé 5 a atteint une valeur seuil prédéterminée.

Ainsi, l'alimentation en énergie électrique du deuxième dispositif d'entraînement motorisé 29 par une batterie auxiliaire permet de dérouler le câble d'alimentation électrique 28 et de mettre à hauteur le premier élément de connexion électrique 27, de sorte à pouvoir recharger la batterie 24 principale à partir de la source d'alimentation électrique externe 25, notamment lorsque le niveau de charge de la batterie 24 principale est inférieur ou égal à la valeur seuil prédéterminée.

Par ailleurs, le deuxième dispositif d'entraînement motorisé 29 peut également comprendre une unité électronique de contrôle, non représentée.

L'unité électronique de contrôle du deuxième dispositif d'entraînement motorisé 29 peut être configurée pour coopérer avec l'unité électronique de contrôle 15 de l'actionneur électromécanique 11 du premier dispositif d'entraînement motorisé 5, de sorte à échanger des données entre elles.

En outre, les modes de réalisation et variantes envisagés peuvent être combinés pour générer de nouveaux modes de réalisation de l'invention, sans sortir du cadre de l'invention défini par les revendications.

## Revendications

1. Installation domotique de fermeture ou de protection solaire comprenant un dispositif d'occultation (3),
le dispositif d'occultation (3) comprenant au moins :
- un écran (2),
- un dispositif de maintien (9, 23) de l'écran (2),
- un premier dispositif d'entraînement motorisé (5), et
- un dispositif d'alimentation en énergie électrique autonome (26),
le premier dispositif d'entraînement motorisé (5) comprenant au moins :
- un actionneur électromécanique (11) permettant de monter et de descendre l'écran (2), entre une position haute et une position basse, l'actionneur électromécanique (11) étant relié électriquement au dispositif d'alimentation en énergie électrique autonome (26),
le dispositif d'alimentation en énergie électrique autonome (26) comprenant au moins :
- une batterie (24), la batterie (24) étant disposée au niveau du dispositif de maintien (9, 23) de l'écran (2),
- un câble d'alimentation électrique (28), et
- un élément de connexion électrique (27), l'élément de connexion électrique (27) étant relié électriquement à la batterie (24) par le câble d'alimentation électrique (28), l'élément de connexion électrique (27) étant configuré pour être relié à une source d'alimentation électrique externe (25), de sorte à recharger la batterie (24),
**caractérisée en ce que** le dispositif d'occultation (3) comprend un deuxième dispositif d'entraînement motorisé (29), le deuxième dispositif d'entraînement motorisé (29) comprenant au moins :
- un actionneur électromécanique (30) permettant d'enrouler et de dérouler le câble d'alimentation électrique (28), reliant électriquement l'élément de connexion électrique (27) à la batterie (24), sur une bobine d'enroulement (31), entre une position enroulée et une position déroulée.

2. Installation domotique de fermeture ou de protection solaire selon la revendication 1, **caractérisée en ce que** le deuxième dispositif d'entraînement motorisé (29) est disposé à l'extérieur d'un caisson (9) du dispositif d'occultation (3), le caisson (9) faisant partie intégrante du dispositif de maintien (9, 23) de l'écran (2).

3. Installation domotique de fermeture ou de protection solaire selon la revendication 1, **caractérisée en ce que** le deuxième dispositif d'entraînement motorisé (29) est disposé à l'intérieur d'un caisson (9) du dispositif d'occultation (3), le caisson (9) faisant partie intégrante du dispositif de maintien (9, 23) de l'écran (2).

4. Installation domotique de fermeture ou de protection solaire selon l'une quelconque des revendications 1 à 3, **caractérisée en ce que** l'actionneur électromécanique (30) du deuxième dispositif d'entraînement motorisé (29) comprend au moins un moteur électrique (33), dont l'arbre de sortie (34) est cinématiquement relié à la bobine d'enroulement (31) du câble d'alimentation électrique (28).

5. Installation domotique de fermeture ou de protection solaire selon l'une quelconque des revendications 1 à 4, **caractérisée en ce que** le premier dispositif d'entraînement motorisé (5) comprend une unité électronique de contrôle (15), l'unité électronique de contrôle (15) commandant, d'une part, l'actionneur électromécanique (11) du premier dispositif d'entraînement motorisé (5) et, d'autre part, l'actionneur électromécanique (30) du deuxième dispositif d'entraînement motorisé (29).

6. Installation domotique de fermeture ou de protection solaire selon l'une quelconque des revendications 1 à 5, **caractérisée en ce que** le deuxième dispositif d'entraînement motorisé (29) comprend une platine (38), la platine (38) étant montée sur le dispositif de maintien (9, 23) de l'écran (2) au moyen d'éléments de fixation (38a, 39).

7. Installation domotique de fermeture ou de protection solaire selon la revendication 6, **caractérisée en ce que** la bobine d'enroulement (31) du câble d'alimentation électrique (28) est montée libre en rotation sur la platine (38), autour d'un axe de rotation (X52) défini par un arbre rotation (52), l'arbre de rotation (52) de la bobine d'enroulement (31) comprenant également un élément de connexion électrique (57).

8. Installation domotique de fermeture ou de protection solaire selon l'une quelconque des revendications 1 à 7, **caractérisée en ce que** le dispositif d'alimentation en énergie électrique autonome (26) comprend une autre batterie, de sorte à alimenter en énergie électrique le deuxième dispositif d'entraînement motorisé (29).

9. Procédé de recharge d'une batterie (24) pour une installation domotique de fermeture ou de protection solaire selon l'une quelconque des revendications 1 à 8, **caractérisé en ce que** ledit procédé comprend au moins les étapes suivantes :
- descente de l'élément de connexion électrique (27) relié au câble d'alimentation électrique (28) en direction de la position déroulée au moyen du deuxième dispositif d'entraînement motorisé (29), et
- branchement d'une source d'alimentation électrique externe (25) sur l'élément de connexion électrique (27) disposé à l'extrémité du câble d'alimentation électrique (28).

10. Procédé de recharge d'une batterie (24) pour une installation domotique de fermeture ou de protection solaire selon la revendication 9, **caractérisé en ce que**, préalablement à l'étape de descente de l'élément de connexion électrique (27), ledit procédé comprend au moins les étapes suivantes :
- détermination du niveau de charge de la batterie (24),
- comparaison de la valeur déterminée du niveau de charge de la batterie (24) à une valeur seuil prédéterminée, et
- commande de l'actionneur électromécanique (30) du deuxième dispositif d'entraînement motorisé (29), lorsque la valeur déterminée du niveau de charge de la batterie (24) est inférieure à la valeur seuil prédéterminée.

11. Procédé de recharge d'une batterie (24) pour une installation domotique de fermeture ou de protection solaire selon la revendication 9, **caractérisé en ce que**, préalablement à l'étape de descente de l'élément de connexion électrique (27), ledit procédé comprend au moins les étapes suivantes :
- activation d'un élément de sélection d'une unité de commande locale (12, 14), l'unité de commande locale (12, 14) coopérant avec une unité électronique de contrôle (15) commandant le deuxième dispositif d'entraînement motorisé (29), et
- commande de l'actionneur électromécanique (30) du deuxième dispositif d'entraînement motorisé (29).

## Patentansprüche

1. Heimtechnikanlage zum Schließen oder zum Sonnenschutz, welche eine Verdunkelungseinrichtung (3) umfasst,
wobei die Verdunkelungseinrichtung (3) mindestens Folgendes umfasst:
- einen Behang (2),
- eine Vorrichtung (9, 23) zum Halten des Behangs (2),
- eine erste Motorantriebsvorrichtung (5), und
- eine autonome Stromversorgungsvorrichtung (26),
wobei die erste Motorantriebsvorrichtung (5) mindestens Folgendes umfasst:
- ein elektromechanisches Stellglied (11) zum Hochfahren und Herunterfahren des Behangs (2) zwischen einer oberen Position und einer unteren Position, wobei das elektromechanische Stellglied (11) elektrisch mit der autonomen Stromversorgungsvorrichtung (26) verbunden ist,
wobei die autonome Stromversorgungsvorrichtung (26) mindestens Folgendes umfasst:
- eine Batterie (24), wobei die Batterie (24) auf der Höhe der Vorrichtung (9, 23) zum Halten des Behangs (2) angeordnet ist,
- ein Stromkabel (28), und
- ein elektrisches Verbindungselement (27), wobei das elektrische Verbindungselement (27) durch das Stromkabel (28) elektrisch mit der Batterie (24) verbunden ist, wobei das elektrische Verbindungselement (27) zur Verbindung mit einer externen Stromversorgungsquelle (25) ausgebildet ist, um die Batterie (24) aufzuladen, **dadurch gekennzeichnet, dass** die Verdunkelungseinrichtung (3) eine zweite Motorantriebsvorrichtung (29) umfasst, wobei die zweite Motorantriebsvorrichtung (29) mindestens Folgendes umfasst:
- ein elektromechanisches Stellglied (30) zum Aufwickeln und Abwickeln des das elektrische Verbindungselement (27) elektrisch mit der Batterie (24) verbindenden Stromkabels (28) auf eine Wickelspule (31) zwischen einer aufgewickelten Position und einer abgewickelten Position.

2. Heimtechnikanlage zum Schließen oder zum Sonnenschutz nach Anspruch 1, **dadurch gekennzeichnet, dass** die zweite Motorantriebsvorrichtung (29) außen an einem Gehäuse (9) der Verdunkelungseinrichtung (3) angeordnet ist, wobei das Gehäuse (9) ein fester Bestandteil der Vorrichtung (9, 23) zum Halten des Behangs (2) ist.

3. Heimtechnikanlage zum Schließen oder zum Sonnenschutz nach Anspruch 1, **dadurch gekennzeichnet, dass** die zweite Motorantriebsvorrichtung (29) im Inneren eines Gehäuses (9) der Verdunkelungseinrichtung (3) angeordnet ist, wobei das Gehäuse (9) ein fester Bestandteil der Vorrichtung (9, 23) zum Halten des Behangs (2) ist.

4. Heimtechnikanlage zum Schließen oder zum Sonnenschutz nach einem der Ansprüche 1 bis 3, **dadurch gekennzeichnet, dass** das elektromechanische Stellglied (30) der zweiten Motorantriebsvorrichtung (29) mindestens einen Elektromotor (33) umfasst, dessen Abtriebswelle (34) kinematisch mit der Wickelspule (31) des Stromkabels (28) verbunden ist.

5. Heimtechnikanlage zum Schließen oder zum Sonnenschutz nach einem der Ansprüche 1 bis 4, **dadurch gekennzeichnet, dass** die erste Motorantriebsvorrichtung (5) eine elektronische Steuerungseinheit (15) umfasst, wobei die elektronische Steuerungseinheit (15) zum einen das elektromechanische Stellglied (11) der ersten Motorantriebsvorrichtung (5) und zum anderen das elektromechanische Stellglied (30) der zweiten Motorantriebsvorrichtung (29) steuert.

6. Heimtechnikanlage zum Schließen oder zum Sonnenschutz nach einem der Ansprüche 1 bis 5, **dadurch gekennzeichnet, dass** die zweite Motorantriebsvorrichtung (29) eine Platine (38) umfasst, wobei die Platine (38) mit Hilfe von Befestigungselementen (38a, 39) auf der Vorrichtung (9, 23) zum Halten des Behangs (2) befestigt ist.

7. Heimtechnikanlage zum Schließen oder zum Sonnenschutz nach Anspruch 6, **dadurch gekennzeichnet, dass** die Wickelspule (31) des Stromkabels (28) frei drehbar um eine durch eine Drehwelle (52) festgelegte Drehachse (X52) auf der Platine (38) befestigt ist, wobei die Drehwelle (52) der Wickelspule (31) ebenfalls ein elektrisches Verbindungselement (57) umfasst.

8. Heimtechnikanlage zum Schließen oder zum Sonnenschutz nach einem der Ansprüche 1 bis 7, **dadurch gekennzeichnet, dass** die autonome Stromversorgungsvorrichtung (26) eine weitere Batterie umfasst, um die zweite Motorantriebsvorrichtung (29) mit Strom zu versorgen.

9. Verfahren zum Laden einer Batterie (24) für eine Heimtechnikanlage zum Schließen oder zum Sonnenschutz nach einem der Ansprüche 1 bis 8, **dadurch gekennzeichnet, dass** das Verfahren mindestens die folgenden Schritte umfasst:
- Herunterfahren des mit dem Stromkabel (28) verbundenen elektrischen Verbindungselementes (27) in Richtung der abgewickelten Position mit Hilfe der zweiten Motorantriebsvorrichtung (29), und
- Anschließen einer externen Stromversorgungsquelle (25) an das am Ende des Stromkabels (28) angeordnete elektrische Verbindungselement (27).

10. Verfahren zum Laden einer Batterie (24) für eine Heimtechnikanlage zum Schließen oder zum Sonnenschutz nach Anspruch 9, **dadurch gekennzeichnet, dass** das Verfahren vor dem Schritt des Herunterfahrens des elektrischen Verbindungselementes (27) mindestens die folgenden Schritte umfasst:
- Bestimmen des Ladezustandes der Batterie (24),
- Vergleichen des bestimmten Wertes des Ladezustandes der Batterie (24) mit einem vorbestimmten Schwellenwert, und
- Steuern des elektromechanischen Stellglieds (30) der zweiten Motorantriebsvorrichtung (29), wenn der bestimmte Wert des Ladezustandes der Batterie (24) kleiner als der vorbestimmte Schwellenwert ist.

11. Verfahren zum Laden einer Batterie (24) für eine Heimtechnikanlage zum Schließen oder zum Sonnenschutz nach Anspruch 9, **dadurch gekennzeichnet, dass** das Verfahren vor dem Schritt des Herunterfahrens des elektrischen Verbindungselementes (27) mindestens die folgenden Schritte umfasst:
- Betätigen eines Auswahlelementes einer lokalen Steuereinheit (12, 14), wobei die lokale Steuereinheit (12, 14) mit einer elektronischen Steuerungseinheit (15) zusammenarbeitet, welche die zweite Motorantriebsvorrichtung (29) steuert, und
- Steuern des elektromechanischen Stellglieds (30) der zweiten Motorantriebsvorrichtung (29).

## Claims

1. A closure or solar protection home-automation equipment comprising a concealing device (3),
the concealing device (3) comprising at least:
- a screen (2),
- a device (9, 23) for holding the screen (2),
- a first motorized drive device (5), and
- an autonomous electrical energy supply device (26),
the first motorized drive device (5) comprising at least:
- an electromechanical actuator (11) making it possible to raise and lower the screen (2), between a high position and a low position, the electromechanical actuator (11) being electrically connected to the autonomous electrical energy supply device (26),
the autonomous electrical energy supply device (26) comprising at least:
- a battery (24), the battery (24) being positioned at the holding device (9, 23) of the screen (2),
- a power supply cable (28), and
- an electrical connection element (27), the electrical connection element (27) being electrically connected to the battery (24) by the power supply cable (28), the electrical connection element (27) being configured to be connected to an external electric supply source (25), so as to recharge the battery (24),
**characterized in that** the concealing device (3) comprises a second motorized drive device (29), the second motorized drive device (29) comprising at least:
- an electromechanical actuator (30) making it possible to wind and unwind the power supply cable (28), electrically connecting the electrical connection element (27) to the battery (24), on a winding spool (31), between a wound position and an unwound position.

2. The closure or solar protection home-automation equipment according to claim 1, **characterized in that** the second motorized drive device (29) is positioned outside a housing (9) of the concealing device (3), the housing (9) being an integral part of the holding device (9, 23) of the screen (2).

3. The closure or solar protection home-automation equipment according to claim 1, **characterized in that** the second motorized drive device (29) is positioned inside a housing (9) of the concealing device (3), the housing (9) being an integral part of the holding device (9, 23) of the screen (2).

4. The closure or solar protection home-automation equipment according to any one of claims 1 to 3, **characterized in that** the electromechanical actuator (30) of the second motorized drive device (29) comprises at least one electric motor (33), the output shaft (34) of which is kinematically connected to the winding spool (31) of the power supply cable (28).

5. The closure or solar protection home-automation equipment according to any one of claims 1 to 4, **characterized in that** the first motorized drive device (5) comprises an electronic control unit (15), the electronic control unit (15) controlling, on the one hand, the electromechanical actuator (11) of the first motorized drive device (5), and, on the other hand, the electromechanical actuator (30) of the second motorized drive device (29).

6. The closure or solar protection home-automation equipment according to any one of claims 1 to 5, **characterized in that** the second motorized drive device (29) comprises a platen (38), the platen (38) being mounted on the holding device (9, 23) of the screen (2) using fastening elements (38a, 39).

7. The closure or solar protection home-automation equipment according to claim 6, **characterized in that** the winding spool (31) of the power supply cable (28) is mounted freely rotating on the platen (38), around a rotation axis (X52) defined by a rotation shaft (52), the rotation shaft (52) of the winding spool (31) also comprising an electrical connection element (57).

8. The closure or solar protection home-automation equipment according to any one of claims 1 to 7, **characterized in that** the autonomous electrical energy supply device (26) comprises another battery, so as to supply electrical energy to the second motorized drive device (29).

9. A method for recharging a battery (24) for a closure or solar protection home-automation equipment according to any one of claims 1 to 8, **characterized in that** said method comprises at least the following steps:
- lowering the electrical connection element (27) connected to the power supply cable (28) toward the unwound position using the second motorized drive device (29), and
- connecting an external electrical supply source (25) on the electrical connection element (27) positioned at the end of the power supply cable (28).

10. The method for recharging a battery (24) for a closure or solar protection home-automation equipment according to claim 9, **characterized in that**, before the step for lowering the electrical energy connection element (27), said method comprises at least the following steps:
- determining the charge level of the battery (24),
- comparing the determined value of the charge level of the battery (24) to a predetermined threshold value, and
- controlling the electromechanical actuator (30) of the second motorized drive device (29), when the determined value of the charge level of the battery (24) is below the predetermined threshold value.

11. The method for recharging a battery (24) for a closure or solar protection home-automation equipment according to claim 9, **characterized in that**, before the step for lowering the electrical energy connection element (27), said method comprises at least the following steps:
- activating a selection element of a local command unit (12, 14), the local command unit (12, 14) cooperating with an electronic control unit (15) controlling the second motorized drive device (29), and
- controlling the electromechanical actuator (30) of the second motorized drive device (29).
